# EUROPEAN PATENT SPECIFICATION

(11) **EP 3 550 986 B1**
(45) Date of publication and mention of the grant of the patent: **07.06.2023**
(21) Application number: 17702848.7
(22) Date of filing: 31.01.2017
(51) Int. Cl.: A23G 1/00, A23G 1/02

(54) **PROCESSING CACAO BEANS**
VERARBEITUNG VON KAKAOBOHNEN
TRAITEMENT DE FÈVES DE CACAO

(43) Date of publication of application: 16.10.2019
(73) Proprietor: Neurogenics Holdings Ltd, Hexham, Northumberland NE47 8AA (GB)
(72) Inventor: STANFORD-FRANCIS, Colin Peter, Northumberland, NE47 8AA (GB)
(74) Representative: Dallimore, Geoffrey Robert
(86) International application number: PCT/EP2017/051983
(87) International publication number: WO 2018/141353

(56) References cited:
- EP-A1- 1 733 625
- EP-A1- 3 114 942
- WO-A1-2008/109637
- US-A- 2 212 544
- US-A1- 2003 215 558
- Anonymous: "Production of 18 micrometer liquor with two grinding steps", Sweets processing, 1 June 2016 (2016-06-01), pages 29-31, XP055355491, Retrieved from the Internet: URL:https://dcyd0ggl1hia3.cloudfront.net/m edia/holding/Artikel/2016/Mai/sweets_proce ssing_5-6.16.pdf?1462865851&Policy=eyJTdGF 0ZW1lbnQiOlt7IlJlc291cmNlIjoiaHR0cHM6XC9cL 2RjeWQwZ2dsMWhpYTMuY2xvdWRmcm9udC5uZXRcL21 lZGlhXC9ob2xkaW5nXC9BcnRpa2VsXC8yMDE2XC9NY WlcL3N3ZWV0c19wcm9jZXNzaW5nXzUtNi4xNi5wZGY ~MTQ2Mjg2N [retrieved on 2017-03-16]
- Anonymous: "GNPD - Organic Chocolate with 75% Organic Cacao with Nibs", Mintel, GNPD, 1 August 2016 (2016-08-01), pages 1-2, XP055355076, Retrieved from the Internet: URL:http://www.gnpd.com/sinatra/recordpage /4181097/from_search/dFe6x5g9UN/?page=4 [retrieved on 2017-03-15]
- Anonymous: "GNPD - Dark Chocolate with Cocoa Nibs", Mintel, GNPD, 1 December 2016 (2016-12-01), pages 1-2, XP055355065, Retrieved from the Internet: URL:http://www.gnpd.com/sinatra/recordpage /4474543/from_search/dFe6x5g9UN/?page=2&co okie_test=yes [retrieved on 2017-03-15]
- Anonymous: "GNPD - Organic Raw Cocoa Nibs", Mintel, GNPD, 1 November 2016 (2016-11-01), pages 1-2, XP055355069, Retrieved from the Internet: URL:http://www.gnpd.com/sinatra/recordpage /4450605/from_search/dFe6x5g9UN/?page=3 [retrieved on 2017-03-15]
- Anonymous: "GNPD - Organic Cocoa Nibs", Mintel, GNPD, 1 September 2016 (2016-09-01), pages 1-2, XP055355072, Retrieved from the Internet: URL:http://www.gnpd.com/sinatra/recordpage /4309717/from_search/dFe6x5g9UN/?page=4 [retrieved on 2017-03-15]
- RACHEL/ANONYMOUS: "DARK CHOCOLATE ICE CREAM WITH COCOA NIBS", INTERNET CITATION, 23 April 2008 (2008-04-23), pages 1-4, XP002516346, Retrieved from the Internet: URL:http://coconutlime.blogspot.com/2008/0 4/dark-chocolate-ice-cream-with-cocoa.html [retrieved on 2009-02-20]
- VELTHUIS T: "The nib-grinding process", MANUFACTURING CONFECTIONER, MANUFACTURING CONFECTIONER PUBLISHING COMPANY, US, vol. 89, no. 9, 1 January 2009 (2009-01-01), pages 95-98, XP009193739, ISSN: 0025-2573
- DAFFEY L F: "Recent Bauermeister development for pre-grinding cocoa nibs", CONFECTIONERY PRODUCTION, SPECIALISED PUBLICATIONS LTD., SURREY, GB, vol. 42, no. 11, 1 January 1976 (1976-01-01), pages 502-503, XP009193740, ISSN: 0010-5473
- "Kakao" In: J. Falbe, M. Regitz: "Römpp Lexikon Lebensmittelchemie", 1995, Thieme Verlag, Stuttgart pages 438-440,

## Description

### Background of the Invention

The present invention concerns processing cacao beans produced by varieties of theobroma cacao.

Processing cacao is a complex process involving many steps and variables. Some documents describing different methods of cacao processing are US5395635, GB1568270, GB2452972, GB2369985, WO98/34496, EP1733625, US2010130422, US2011311709, US2007077318, US2003157207, US2011064849, US2009041894, US2002034579 and US2012039930.

Generally speaking, chocolate manufacturers use processes involving the following steps:
I. Fermentation: Cocoa beans and mucilage are fermented for a period of 7 to 14 days to prevent germination and in an effort to improve the flavour of the end product.
II. Drying: The beans are dried for a period of no more than two weeks.
III. Roasting: The dried beans are roasted to facilitate de-shelling.
IV. De-shelling (also called cracking or fanning): The roasted beans are passed through serrated cones (conical rollers) which crack (fracture) the shells.
V. Winnowing: The cracked beans are exposed to an air current so that the fragmented shells are blown away from the heavier "nibs".
VI. Dutching: The nibs are washed with an alkali such as a solution of potassium hydroxide, to neutralize their acidity. Dutching is not always performed since it causes complications in labelling the final product depending on where it is to be retailed, and the local regulations concerning food labelling. It is thought to have an effect on the antioxidation efficacy (ORAC), total polyphenol content (TP), and flavanols (procyanidins) content of the finished product.
VII. Grinding: Cocoa nibs are ground into "cocoa liquor" also known as unsweetened chocolate or cocoa mass. The grinding process generates heat which causes the granular cocoa nib to melt to a liquid condition as the high amount of fat contained in the nib melts. This is sometimes known as cacao liquor. The temperature and degree of milling varies according to the type of nib used and the product required. This results in an inhomogeneous mixture of the low melting point constituents of the cacao with the ground solid fraction having a relatively high melting point.
VIII. Pressing: The cacao liquor is pressed under high pressure to produce two products, namely cacao butter and cacao solids/mass. The cacao mass comes out of the machine in the form of a cake. The cacao mass can be ground to a powder for use as cocoa flavouring in drinks. The cocoa butter is the basis of conventional chocolate products and some health and beauty products.
IX. Chocolate production: To produce chocolate the cacao butter is added to a quantity of un-pressed cacao liquor together with quantities of sugar, milk, emulsifying agent. Cocoa butter equivalents are also added and mixed. The proportions of the different ingredients depend on the type of chocolate being made.
X. Conching and refining: Conching involves rolling the chocolate until a smooth paste is formed. Refining improves the texture of the chocolate. Alternatively, the chocolate may be stirred to implement an emulsifying process.
XI. Moulding: The chocolate is put into moulds and allowed to set prior to packaging.

The conventional prior art process removes some of the nutrients from the final chocolate product and changes others. Some of these nutrients may have significant nutritional and health benefits.

"Production of 18 micrometer 1-19 liquor with two grinding steps", Sweets processing, 1 June 2016 (2016-06-01), pages 29-31, describes a two-stage grinding process to produce cocoa liquor with chocolate fineness of 18µm.

US2212544, WO2008109637 and EP3114942 each describe further two-stage grinding processes for producing chocolate or cocoa products.

### Brief Summary of the Invention

The present invention provides a process for the production of a whole cacao bean nib derivative product according to claim 1.

The process generally involves:
(i) a shortened period of fermentation of the cacao beans between five hours and forty-eight hours;
(ii) a prolonged period of drying to condition the beans so that the shells are removable by air winnowing; and
(iii) a two-stage grinding process in which the raw (unroasted) nibs are ground, without forming or at least separating into a liquor, to a mesh size of 60um.

The drying step preferably exposes the fermented beans to drying air and sunlight for a period of at least three weeks. Preferably the drying process takes place at a humidity of between 7% and 8%.

Coarse grinding requires the size of the ground nibs to be reduced to less than 200pm. Size in this context means that the ground nibs will pass through a mesh or sieve with a maximum dimension of 200pm. The coarse grinding stage may take the nibs down to 175µm.

The step of fine grinding the dry coarse ground nibs to a size of 60pm or less means that the resulting ground nibs will pass through a mesh of 60pm or less.

Products produced by methods embodying the present invention retain more of the nutrients present in cacao beans in their natural form. Methods embodying the present invention further obviate the steps of pressing the cacao liquor, separating the cacao liquor and handling the resulting cacao butter and cacao mass.

The fine ground cocoa product is a potentially saleable item and, at this stage, may be packaged for transportation and further processing at a different location. However, the process may continue at the same site. The next step of a process embodying the present invention is melting the fine ground cacao by heating at a low steady temperature. In practice this means heating to a constant temperature below the local boiling point of water, i.e. nominally less than 100°C and preferably a temperature only sufficient to cause the cacao product to melt and flow into a mould. This helps to prevent changes to the active chemical composition of the product and retain the presence and quality of beneficial nutrients and flavanols.

The process may include the further steps of pouring the molten cacao product into a mould.

The molten cacao product may be pressed in the mould. This helps to improve the appearance of the finished product.

The moulds may be vibrated or stirred to displace air from the product and ensure that the mould is completely filled.

The moulds are chilled to solidify the cacao product.

The solidified product may be tipped from the moulds and packaged for shipment.

### Brief Description of the Drawing

A process for making a cacao product will now be described, by way of example only, with reference to the accompanying illustrative figure, in which:

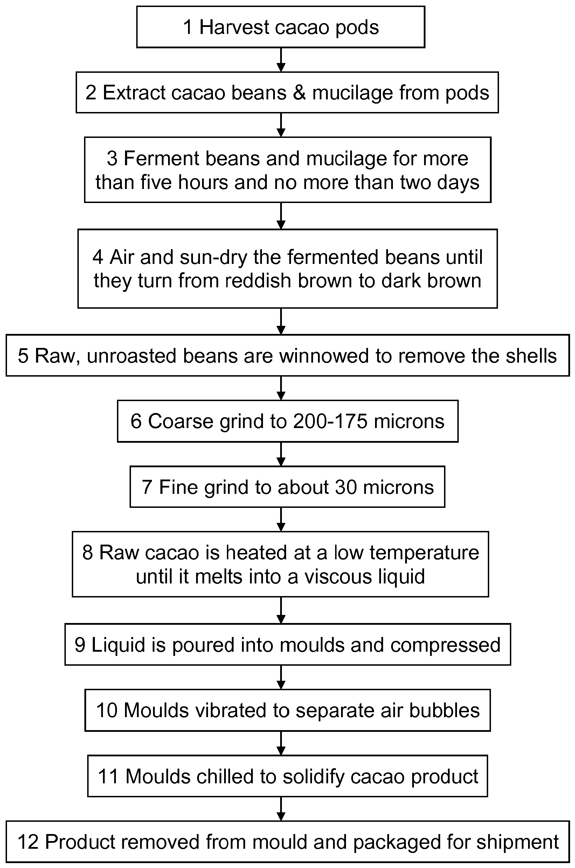

Figure 1 is a flow chart describing a method for processing cacao.

### Detailed Description of the Invention

A process flow chart is shown in Figure 1. At step 1 the ripe cacao pods are harvested. Each cacao pod holds approximately 40 beans. These are carefully removed from the pods at step 2, ensuring that the beans are not injured in the process. The beans are scooped out of the pods and then collected together for fermenting at step 3 in one or more cocoa fermentation boxes or "sweatboxes". When the beans are first removed from the pod, they are white, with mucilage like coating around each bean. This mucus coating is also included in the sweatboxes and provides the sugar needed as the basis for a fermentation process that each bean will undergo. Fermentation begins once the cacao beans are exposed to the air. Saccharomyces spores from the naturally occurring yeasts settle on the beans and mucilage and start to breakdown the sugar into alcohol and carbon dioxide. The alcohol is further oxidised to acetic acid by mycoderma aceti.

Conventional chocolate makers may remove the acetic acid generated through cocoa fermentation by adding a base such as potassium hydroxide solution later in the process. The present process does not treat the acetic acid by the addition of a base.

During step 3 the fermentation process promotes chemical changes both outside and inside the bean. The sweet mucilage-like coating on each bean feeds the fermentation that takes place outside the bean. The fermentation process causes the temperature in the sweat box to rise quickly. During the fermentation period, temperatures can climb to 48°C (122°F). The conditions within the sweat box are controlled so that, on the second day of fermentation, the temperature reaches 43°C (113°F). The temperature, concentration of alcohol and acetic acid causes the germ within the cacao bean to die. When the germ dies, important chemical changes begin as enzymes within the bean itself are released. The present process limits the fermentation period to between five hours and forty-eight hours (two days).

At the end of the fermentation process the fermented beans are laid out on trays to air and sun-dry at step 4. This process requires a prolonged drying period which ends when the colouration of the beans turns from a reddish brown to a dark brown. The period will vary depending on the ambient conditions but will be three weeks or more. The preferred conditions for this drying stage are an ambient air humidity of between 7% and 8%. Typical ambient temperatures are between 10°C and 40°C and more typically between 15°C and 25°C.

The drying period adopted in more conventional chocolate manufacture is normally two weeks and is followed by a roasting step where the beans are cooked, dry at high temperatures well in excess of 100°C. The roasting step helps to make the bean shells dry and fragile facilitating a subsequent cracking and separation step but also causes changes to the kernel or "nib" of the bean. The present process avoids any roasting step.

At step 5 the dried beans are subject to a winnowing process where air is blown across the intact beans. The winnowing step causes the now fragile shell to fragment and separate from the nib.

The winnowed nibs are then ground in a coarse grinding mill at step 6. The coarse ground nibs are reduced to a mesh size of 200pm or less, though preferably no less than 175pm.

Step 7 delivers the coarse ground cacao to a second fine grinding step which reduces the cacao to 60pm and preferably 30pm or less. It has not been possible to grind the cacao nibs to the fine ground condition in a single stage because attempts to do so in known equipment result in separation of the liquid constituents of the nib which clog the grinding apparatus. The two grinding steps take place at substantially ambient temperature, i.e. 10°C to 40°C and preferably between 15°C and 25°C.

It is at this stage that the cacao begins to change structure. As the fine grinding process proceeds the cacao oils are released and the ground cacao begins to change shape and cacao butter particles synthesise to make long cacao particles that glisten. Unlike the previously described conventional process, the fine ground cacao nibs do not form a separate or separated liquor, they instead form an homogeneous plastic paste which supports its own weight.

Conventional chocolate making processes include a grinding step which results in a separated liquor as described at stage VII in the Background of the Invention section above. By adopting a two-stage grinding process the present process avoids the production of liquor and the subsequent conventional pressing and certain other associated steps, mentioned in the Background of the Invention section, are obviated.

At step 8 the raw fine ground cacao product is heated in a Baine Marie or other suitable device in order to melt the fine ground cacao into a viscous liquid. The Baine Marie or other device serves to prevent the temperature of the fine ground cacao from rising above the boiling point of water (i.e. approximately 100°C or its equivalent at ambient pressure) by surrounding the mass of fine ground cacao in a vessel with a jacket of water.

At step 9, once melted, the cacao product is poured or spooned and pressed into moulds, typically with a palette knife. The moulds are vibrated at step 10 to drive out air bubbles, and chilled at step 11 to cause the cocoa product to set. At step 12 the set cacao is separated from the mould and packaged.

Tables 1 and 2 below are the results of analysis of two samples of the cacao product from a single production run using a criollo bean as the raw material. One of the objects of the process is to produce a product with a particularly high epicatechin content for the source bean. In this case the process achieves a uniquely high proportion of epicatechin from a criollo bean raw material. Variations in the quality of a specific criollo bean harvest may result in an epicatechin content varying by ± 20% in extreme cases and more usually by ±5% from the tabulated value content for the source bean.

**TABLE 1**

| Analysis of pure cacao | | | |
|---|---|---|---|
| Sample code P15-05062-1 | | | |
| Method | Analysis | Result | Units |
| TM-228 | Total Polyphenols (as Gallic Acid Equivalent) | 5.4 | g/100g |
| TM-336 | Monomer | 3853 | mg/kg |
| TM-336 | Dimer | 4654 | mg/kg |
| TM-336 | Trimer | 3430 | mg/kg |
| TM-336 | Tetramer | 2059 | mg/kg |
| TM-336 | Pentamer | 2249 | mg/kg |
| TM-336 | Hexamer | 1474 | mg/kg |
| TM-336 | Heptamer | 669 | mg/kg |
| TM-336 | Octamer | 292 | mg/kg |
| TM-336 | Nonamer | 277 | mg/kg |
| TM-336 | Decamer | 56.2 | mg/kg |
| TM-336 | Total Procyanidin | 19013 | mg/kg |
| TM-540 | Catechin | 534 | mg/kg |
| TM-540 | Epicatechin | 2985 | mg/kg |
| - | Miscellaneous unidentified components | 904457.8 | mg/kg |

**TABLE 2**

| Analysis of pure cacao | | | |
|---|---|---|---|
| Sample code P15-05630-1 | | | |
| Method | Analysis | Result | Units |
| TM-150 | Caffeine | 1273 | mg/kg |
| TM-150 | Theobromine | 10634 | mg/kg |
| | Miscellaneous unidentified components | 988093 | mg/kg |

Trinitario beans are known to have a relatively high proportion of epicatechin. The use of a process embodying the present invention on trinitario or criollo beans is expected to produce a cacao product with a total polyphenol content of between 4000 and 5000 mg/kg and an epicatechin content of between 2800 and 3800 mg/kg. This is because the process does not modify and destroy epicatechin as do conventional cacao production processes.

Table 3 below provides an analysis of the constituents of a sample of the cacao product produced by the process from criollo beans:

| **Table 3** | | | |
|---|---|---|---|
| Lab Reference: CH309101 | | | |
| Sample Details | Description: Pure Cacao | | |
| | Date received: 23/06/2015 | | |
| Method Number | Test | Result | Units |
| AM/C/1015 | Moisture (Loss on Drying) | 2.0 | g/100 |
| AM/C/224 | Protein (Nx6.25) | 13.8 | g/100g |
| AM/C/1015 | Total Fat (NMR) | 55.1 | g/100g |
| AM/C/803 | Ash | 3.3 | g/100g |
| AM/C/901 | Total carbohydrate (by difference) | 25.8 | g/100g |
| AM/C/309 | Total dietary fibre (AOAC) | 24.7 | g/100g |
| AM/C/901 | Available carbohydrate (by difference) | 1.1 | g/100g |
| AM/C/901 | Energy | 605 | Kcal/100g |
| AM/C/901 | Energy | 2490 | kJ/100g |
| AM/C/403 | Total Sugars (expressed as Glucose) | 1.9 | kJ/100g |
| AM/C/1002 | Calcium | 82.4 | mg/100g |
| AM/C/1002 | Copper | 1.94 | mg/100g |
| AM/C/1002 | Iron | 2.93 | mg/100g |
| AM/C/1002 | Potassium | 847 | mg/100g |
| AM/C/1002 | Magnesium | 333 | mg/100g |
| AM/C/1002 | Zinc | 4.74 | mg/100g |
| AM/C/1002 | Sodium (ICP-OES) | 11.3 | mg/100g |
| SUB-CON | Chromium (Sub-Contracted) | 0.24 | mg/100kg |
| AM/C/107 | FAME C6.0 Caproic Acid (In Fat) | <0.01 | g/100g |
| AM/C/107 | FAME C8.0 Caprylic Acid (In Fat) | 0.01 | g/100g |
| AM/C/107 | FAME C10.0 Capric Acid (In Fat) | <0.01 | g/100g |
| AM/C/107 | FAME C12.0 Lauric Acid (In Fat) | <0.01 | g/100g |
| AM/C/107 | FAME C14.0 Myristic Acid (In Fat) | 0.06 | g/100g |
| AM/C/107 | Myeristoleic Acid (In Fat) | <0.01 | g/100g |
| AM/C/107 | FAME C15.0 Pentadecanoic Acid (In Fat) | 0.05 | g/100g |
| AM/C/107 | FAME C16.0 Palmitic Acid (In Fat) | 27.22 | g/100g |
| AM/C/107 | FAME 16.1 Palmitoleic Acid (In Fat) | 0.26 | g/100g |
| AM/C/107 | FAME C17.0 Heptadecanoic Acid (In Fat) | 0.31 | g/100g |
| AM/C/107 | FAME 17.1 Heptadecenoic Acid (In Fat) | 0.04 | g/100g |
| AM/C/107 | FAME C18.0 Stearic Acid (In Fat) | 32.43 | g/100g |
| AM/C107 | FAME C18.1 Oleic Acid (In Fat) | 30.57 | g/100g |
| AM/C/107 | FAME C18.2 Linoleic Acid (In Fat) | 2.91 | g/100g |
| AM/C/107 | FAME C18.3 Linolenic Acid (omega 3) (In Fat) | 0.19 | g/100g |
| AM/C/107 | FAME C18.3 Linolenic Acid (omega 6) (In Fat) | 0.02 | g/100g |
| AM/C/107 | FAME 18.4 Octadecatetraencic Acid (In Fat) | <0.01 | g/100g |
| AM/C/107 | FAME C20.0 Arachidic Acid (In Fat) | 1.09 | g/100g |
| AM/C/107 | FAME C20.1 Gadoleic Acid (In Fat) | 0.06 | g/100g |
| AM/C/107 | FAME 20.2 Eicosadienoic Acid (In Fat) | <0.01 | g/100g |
| AM/C/107 | Eicosatrienoic Acid (omega 3) (In Fat) | <0.01 | g/100g |
| AM/C/107 | FAME C20.3 Elcosatrienic Acid | 0.01 | g/100g |
| | (omega 6) (In Fat) | | |
| AM/C/107 | FAME C20.4 Arachiclonic Acid (omega 3) (In Fat) | <0.01 | g/100g |
| AM/C/107 | FAME C20.4 Arachiclonic Acid (omega 6) (In Fat) | <0.01 | g/100g |
| AM/C/107 | FAME C20.5 Elcosapentaenoic Acid (In Fat) | <0.01 | g/100g |
| AM/C/107 | FAME C22.0 Behenic Acid (In Fat) | 0.18 | g/100g |
| AM/C/107 | FAME C22.1 Cetoleic Acid (In Fat) | <0.01 | g/100g |
| AM/C/107 | FAME C22.4 Docosatetraenoic Acid (In Fat) | 0.05 | g/100g |
| AM/C/107 | FAME C22.5 Clupanodonic Acid (In Fat) | <0.01 | g/100g |
| AM/C/107 | FAME C22.6 Docosahexaenoic Acid (in Fat) | 0.02 | g/100g |
| AM/C/107 | FAME C24.0 Lignoceric Acid (In Fat) | 0.10 | g/100g |
| AM/C/107 | Saturated Fatty Acids (In Sample) | 33.86 | g/100g |
| AM/C/107 | Monounsaturated Fatty Acids (In Sample) | 17.05 | g/100g |
| AM/C/107 | Polyunsaturated Fatty Acids (In Sample) | 1.77 | g/100g |
| AM/C/107 | Estimated Total Omega 3 (In Fat) | 0.20 | g/100g |
| AM/C/107 | Estimated Total Omega 3 (In Sample) | 111 | mg/100g |
| AM/C/107 | FAME C15.1 Pentadecenoic Acid (In Sample) | <0.01 | g/100g |
| AM/V/906 | Betacarotene | 121 | pg/100g |
| AM/V906 | Betcarotene (as Retinol equivalents) | 20.2 | pg/100g |
| AM/V/702 | Vitamin A (Retinol) | <60.0 | µg/100g |
| AM/V/228 | Tryptophan (Total) | 0.15 | g/100g |

## Claims

1. A process for the production of a whole cacao bean nib derivative product comprising the steps of:
extracting the cacao beans and mucilage from the pods;
fermenting the beans and mucilage for a period of less than two days;
drying the fermented beans for a period of three weeks or more in dry air;
winnowing the dried, unroasted beans by blowing a stream of air through a mass of the dried beans to fragment the shells and separate the shells from the nibs;
coarse grinding cacao nibs, dry and at ambient temperature in a range of 10°C to 40°C to a size of less than 200um;
fine grinding the dry, coarse ground nibs, at ambient temperature, to a size of 60pm or less to form a paste without separation into a liquor.

2. The process of claim 1 wherein the step of fine grinding grinds the coarse ground nibs to 30pm or less.

3. The process of claim 1 comprising the step of fermenting the beans and mucilage for a period of more than five hours.

4. The process of claim 1 comprising the step of fermenting the beans for a period of more than twenty-four hours.

5. The process of any preceding claim, comprising the step of melting the fine ground cacao by heating at a steady temperature of less than 100°C.

6. The process of claim 1, comprising the step of drying the fermented beans by exposure to air and light until they turn from a reddish brown to a dark brown.

7. The process of any preceding claim wherein the beans are fermented without adding an alkali.

## Patentansprüche

1. Verfahren zur Herstellung eines aus Nibs von ganzen Kakaobohnen abgeleiteten Produkts, umfassend die Schritte:
Extrahieren der Kakaobohnen und des Schleimstoffs aus den Schoten;
Fermentieren der Bohnen und des Schleimstoffs für einen Zeitraum von weniger als zwei Tage;
Trocknen der fermentierten Bohnen für einen Zeitraum von drei Wochen oder mehr an trockener Luft;
Abtrennen der getrockneten ungerösteten Bohnen durch Blasen eines Luftstroms durch eine Masse der getrockneten Bohnen, um die Schalen zu fragmentieren und die Schalen von den Nibs zu trennen;
Grobmahlen von Kakaonibs, trocken und bei Umgebungstemperatur in einem Bereich von 10 °C bis 40 °C, auf eine Größe von weniger als 200 µm;
Feinmahlen der trockenen grobgemahlenen Nibs bei Umgebungstemperatur auf eine Größe von 60 µm oder weniger, um eine Paste zu bilden, ohne Auftrennen zu einer Flüssigkeit.

2. Verfahren gemäß Anspruch 1, wobei der Schritt des Feinmahlens die grobgemahlenen Nibs auf 30 µm oder weniger mahlt.

3. Verfahren gemäß Anspruch 1, umfassend den Schritt des Fermentierens der Bohnen und des Schleimstoffs für einen Zeitraum von mehr als fünf Stunden.

4. Verfahren gemäß Anspruch 1, umfassend den Schritt des Fermentierens der Bohnen für einen Zeitraum von mehr als vierundzwanzig Stunden.

5. Verfahren gemäß einem der vorstehenden Ansprüche, umfassend den Schritt des Schmelzens des feingemahlenen Kakaos durch Wärmen bei einer gleichbleibenden Temperatur von weniger als 100 °C.

6. Verfahren gemäß Anspruch 1, umfassend den Schritt des Trocknens der fermentierten Bohnen durch Exposition gegenüber Luft und Licht, bis sie sich von einem rötlichen Braun zu einem dunklen Braun umwandeln.

7. Verfahren gemäß einem der vorstehenden Ansprüche, wobei die Bohnen ohne Zugeben eines Alkalis getrocknet werden.

## Revendications

1. Procédé pour la production d'un produit dérivé d'éclats de fèves de cacao entières, comprenant les étapes de :
extraction des fèves de cacao et mucilage des cabosses ;
fermentation des fèves et mucilage pendant une période de moins de deux jours ;
séchage des fèves fermentées pendant une période de trois semaines ou plus à l'air sec ;
vannage des fèves séchées, non grillées en soufflant un courant d'air à travers une masse des fèves séchées pour fragmenter les coquilles et séparer les coquilles des éclats ;
broyage grossier des éclats de cacao, secs et à température ambiante dans une plage de températures de 10 °C à 40 °C, jusqu'à une taille inférieure à 200µm ;
broyage fin des éclats de cacao secs, grossièrement broyés, à température ambiante, jusqu'à une taille de 60 µm ou moins pour former une pâte sans séparation en une liqueur.

2. Procédé selon la revendication 1, dans lequel l'étape de broyage fin broie les éclats grossièrement broyés jusqu'à 30 µm ou moins.

3. Procédé selon la revendication 1 comprenant l'étape de fermentation des fèves et de mucilage pendant une période de plus de cinq heures.

4. Procédé selon la revendication 1 comprenant l'étape de fermentation des fèves pendant une période de plus de vingt-quatre heures.

5. Procédé selon une quelconque revendication précédente, comprenant l'étape fusion du cacao finement broyé par chauffage à une température constante de moins de 100 °C.

6. Procédé selon la revendication 1, comprenant l'étape de séchage des fèves fermentées par exposition à l'air et à la lumière jusqu'à ce qu'elles passent d'un brun rougeâtre à un brun foncé.

7. Procédé selon une quelconque revendication précédente dans lequel les fèves sont fermentés sans ajouter un alcali.
